# EUROPEAN PATENT SPECIFICATION

(11) **EP 0 696 384 B1**
(45) Date of publication and mention of the grant of the patent: **11.12.1996**
(21) Application number: 94916630.0
(22) Date of filing: 28.04.1994
(51) Int. Cl.: H01M 6/50, H01M 12/06

(54) **CATHODE AIR RECIRCULATION AND MOISTURE CONTROL**
RÜCKFÜHRUNG UND FEUCHTIGKEITSREGELUNG VON KATHODENLUFT
SYSTEME DE REGULATION D'HUMIDITE ET DE RECIRCULATION D'AIR D'UNE CATHODE

(30) Priority: 30.04.1993 US 56440
(43) Date of publication of application: 14.02.1996
(73) Proprietor: AER ENERGY RESOURCES, INC., Smyrna, GA 30082 (US)
(72) Inventor: SKEGGS, Leonard T., Kirtland, OH 44094 (US); YOUNG, Jeffrey E., Peachtree City, GA 30269 (US); CHERRY, Ernest C., Doraville, GA 30340 (US)
(74) Representative: Chettle, Adrian John
(86) International application number: US9404804
(87) International publication number: WO9425991

(56) References cited:
- EP-A- 0 044 060
- EP-A- 0 293 007
- EP-A- 0 341 189
- WO-A-93/18556
- WO-A-93/19495
- WO-A-94/02966
- US-A- 3 473 963
- US-A- 3 576 677
- EXTENDED ABSTRACTS, vol.81, no.2, October 1981, PENNINGTON, NEW JERSEY US pages 302 - 304 DEMCZYK ET AL. 'Thermal Management of the Iron-Air Battery System'

## Description

### Technical Field

This invention relates generally to air manager systems and, more particularly, controls for admitting air and moisture to a cathode.

### Background of the Invention

Metal-air batteries include an air permeable cathode and a metallic anode separated by an aqueous electrolyte. For example, during operation of a zinc-air battery, oxygen from the ambient air is converted at the cathode to hydroxide ions, zinc is oxidized at the anode, reacts with hydroxide ions, and water and electrons are released to provide electrical energy. Metal-air batteries have a relatively high energy density because the cathode of a metal-air battery utilizes oxygen from ambient air as a reactant in the electro chemical reaction rather than a heavier material such as a metal or metallic composition.

Metal-air battery cells are often arranged in multiple cell battery packs to provide a sufficient amount of power output. In addition, it is necessary to expose air cathodes of the cells to a continuous flow of air at a flow rate sufficient to achieve a desired output. Such an arrangement is shown in US-A-4,913,983 wherein a fan is used to supply a flow of air to a pack of metal-air battery cells. One problem with metal-air batteries is that the ambient humidity can cause a metal-air battery to fail. Equilibrium vapor pressure of the metal-air battery results in an equilibrium relative humidity that is typically about 45%. If ambient humidity is greater than the equilibrium relative humidity value for the metal-air battery, the metal-air battery will absorb water from the air through the cathode and fail due to a condition called flooding. Flooding may cause the battery to burst. If the ambient humidity is less than the equilibrium relative humidity value for the metal-air battery, the metal-air battery will release water vapor from the electrolyte through the air cathode and fail due to drying out. In most environments where a metal-air battery is used, failure occurs from drying out.

In order for a metal-air battery to maintain sufficient power output, a high air flow is needed across the cathode to supply an adequate amount of oxygen. In a laminar air flow, the layer of air that is in immediate contact with the cathode is rapidly depleted of oxygen. Creating turbulence by increasing the rate of ambient air flow across the cathode is one method of replacing the depleted oxygen. However, increasing the air flow with ambient air exacerbates the problems of flooding or drying out depending on the relative humidity of the ambient air.

Another problem which causes an insufficient supply of oxygen to the cathode may be attributed to the design of the cathode plenum. Generally, a cathode plenum has an inlet to receive ambient air and an outlet to exhaust the reactant air. U.S. Patent No. 4,894,295 to Cheiky discloses an air chamber housing which has either a linear air duct or a U-shaped air duct to admit air to the cathode of a metal-air battery cell. The air may flow primarily down the center of the duct across the cathode from inlet to outlet causing a channeling effect. Because of this channeling effect, pockets of air remote from the air flow channel may be moving and being replaced with fresh air at a very slow rate, thus causing the output of the metal-air cell to decrease. Reducing the channeling effect would increase battery output.

By controlling the flow of ambient air and reactant air, some of the problems which cause the flooding or drying out of a metal-air cell may be reduced.

U.S. Patent No. 3,473,963 to Sanderson discloses a fuel cell system that provides some control for the ambient and reactant air. Sanderson recirculates reactant air, laden with moisture obtained from the cell during operation of the cell, to humidify the ambient air used by the cell. The recirculated humidified reactant air is also used to enhance carbon dioxide absorption in a carbon dioxide scrubber. While the Sanderson method of recirculating reactant air may help to prevent drying out of the fuel cell, Sanderson does not provide adequate control of the ambient air entering this system. When the ambient air has a high humidity, Sanderson does not provide adequate control to compensate for moisture in the ambient air. Therefore, the cell may be subject to flooding as a result of ambient air. Because the cooling air and reactant air supplies are coupled, neither may be independently limited to provide moisture control. The lack of full control of the ambient air entering the system of the Sanderson system does not alleviate the problems discussed above.

French Patent No. 2,353,142 to Jacquelin discloses an air supply system for an electrochemical generator that provides a recirculating path for the air used by the cell. The air manager is designed to avoid local accumulations of carbonate deposits and to vary the output of the cells by varying the amount of the incoming air (oxygen). Jacquelin discloses three modes of operation: maximum mode. slow motion mode, and a predetermined functioning mode. During the maximum mode of operation air is admitted from the atmosphere across the cathode then exhausted through an outlet. During the maximum mode of operation, the air is not recirculated. A turbo exhauster is provided to ensure circulation of the air when air is being exhausted to the atmosphere. Operation during the maximum mode with no control to compensate for the relative humidity of the air is subject to the problems discussed above with flooding and drying out. During slow motion mode, no ambient air is admitted nor is any air exhausted, thus the oxygen supply is rapidly depleted from the air. This results in a low or slow mode of operation. During the predetermined functioning mode, fresh air is mixed with the air in proportions set by a mixing valve. In the predetermined functioning mode, the ambient air admitted may subject the cell to the problems of flooding and drying out as in the maximum operation mode. The Jacquelin invention proposes to maintain a constant flow of gas on the electrodes to assure a good distribution of residual carbon dioxide on the entire surface of the electrodes. No method is provided to supply and vary air flow to meet varying load demands while reducing the effects of flooding or drying out. Furthermore, the air is supplied to an enclosed space containing a series of cells as well as pipes carrying the anode solution. Since all components of the cell are exposed to the air flow, one would expect cooling requirements to interfere with control of the air for the purpose of supplying oxygen, because often more air is required for cooling than is needed for the electro-chemical reaction.

To gain more control over reactant air, one prior design separates the reactant air flow from a cooling air flow. In this design the reactant air flow rate is reduced relative to the cooling flow to reduce flooding or drying out effects. It has also been suggested prior to the present invention to control the humidity of air flowing into an air battery.

U.S. Patent No. 4,729,930 to Beal et al. discloses an apparatus for regulating and augmenting air supply for a fuel cell power plant during transient load increases. Beal provides a load monitor that has its output connected to the input of a microprocessor, the output of which adjusts a motor-controlled valve in the air supply line. In order to prevent oxygen starvation of the fuel cell when the imposed load increases Beal calculates the time needed for the control valve to reach a setting which allows an oxygen flow to meet increased load demand. According to Beal, when the oxygen supply cannot be increased through the control valve rapidly enough to immediately meet load demand, Beal provides auxiliary solenoid valves which open at the instant of increased load demand so as to provide oxygen to the fuel cell more quickly. The auxiliary valves will close when the difference in theoretical current produced by the available oxygen and the actual load demand drops below one or more preselected values. While Beal discloses a method to increase oxygen supply when load demand increases, Beal does not disclose a method to decrease the oxygen supply to the fuel cell when load demand decreases so as to provide moisture control by limiting an excess amount of dry air or high humidity air to prevent drying out or flooding. Neither does Beal disclose recirculating the reactant air utilized by the cathode to provide moisture control.

U.S. Patent No. 4.913,983 to Cheiky, noted above, discloses a metal-air battery power supply to which the air flow is varied by a variable speed fan. The metal-air battery cells are enclosed in an air tight chamber which has a baffle that is movable in front of the air inlet and air outlet to seal off the container when the power supply is not in use. When the power is turned on, the air baffle is moved to permit an air flow into the air inlet that is exhausted through an air outlet. A fan which controls the air flow through the air inlets is run at different speeds depending upon use requirements of the connected computer. Cheiky '983 does not disclose limiting the air available through the air inlet to the air cathode for varying levels of output, and does not recirculate any air passing through the power supply.

### Summary of the Invention

Generally described, the present invention provides a metal-air power supply as defined in appended claim 1.

The present invention also meters the amount of ambient air entering in the flow of reactant air to maintain a selected current output. The air manager system optimizes the use of ambient air and reactant air utilized by a metal-air cell by recirculating the reactant air and admitting only a sufficient amount of oxygen from the ambient air to generate the necessary output for the battery, thus reducing the problems of flooding and drying out.

The present invention also provides a monitor to determine whether an optimum air supply is available to the metal-air cell. A signal generating circuit is responsive to the current drawn, as measured by a current monitoring circuit, to provide a first signal indicative of an insufficient supply of oxygen to the cell and to provide a second signal indicative of a need for restriction of the air supply to the metal-air cell so as to protect the cell from an excessive supply of air. The air supply adjustment helps to provide further humidity control. An indicator may be provided to indicate an insufficient supply or need for restriction of air to the cell in response to the first or second signal, respectively. The indicator may be a visual display, an audible tone, or a voice message.

The air inlet of the air manager system is set initially to a predetermined position based upon the status of the load to control the amount of oxygen supplied to the cell. The amount of oxygen admitted may be increased in response to the first signal by stepping open the air inlet based upon the load demand. The amount of oxygen admitted may be increased or decreased by setting the air inlet to a different predetermined position whenever the type of load applied is changed. Also, the amount of oxygen may be decreased after the air inlet valve opens wider than a predetermined setting for a predetermined time. In another embodiment of the oxygen monitor, an oxygen control circuit responds to the current drawn by the load by opening the air inlet for a predetermined time to provide air to the metal-air cell when the current is insufficient to meet load demand.

A humidifier may also be incorporated into the recirculating pathway to humidify the recirculated reactant air. The humidifier is operative in response to a humidity monitor which monitors the humidity of the recirculating air. Alternately, the humidity monitor may be used to selectively direct the air flow through a bypass channel in order to prevent the air from going through the humidifying pathway.

An oxygen generator may also be provided to deliver oxygen to the pathway as needed by the cathode instead of oxygen from the ambient air. An outlet for exhausting a controlled amount of air corresponding to an amount of new air admitted is also provided.

In order to ensure that the air flow reacts with the entire surface area of the cathode, the direction of the air flow may be changed by a plurality of baffles incorporated into the pathway of the reactant air. The baffles used for changing the direction of the flow of the reactant air may define a serpentine path across the surface of the cathode covering essentially all points of the surface. The invention preferably provides a cathode plenum having an inlet and outlet and a plurality of baffles defining a nonlinear path for the air to flow from the inlet to the outlet.

Thus, it is an object of this invention to provide an air manager system for a metal-air cell which provides an effective use of reactant and ambient air.

It is a further object of this invention to admit ambient air in a manner to approximately replace oxygen removed by the cell.

It is a further object of this invention to recirculate reactant air across the cathode in a manner which maintains a selected current output density.

It is a further object of this invention to provide a high air flow across the cathode while reducing the effects of flooding and drying out of the cell due to the humidity level of ambient air.

It is a further object of this invention to selectively direct recirculating air through either a humidifier or bypass channel in order to maintain a selected relative humidity within the air manager.

It is also a further object of this invention to provide an oxygen supply control circuit which increases or decreases the oxygen available to the metal-air cell based on load demand so as to provide moisture control.

It is also a further object of this invention to maintain the oxygen supply to a metal-air cell at an optimum setting based on the particular load status applied to the cell.

It is a further object of this invention to reduce the channeling effect that is caused by direct air flow from cathode plenum inlet to outlet.

Other objects, features and advantages of the present invention will become apparent upon reviewing the following description of preferred embodiments of the invention, when taken in conjunction with the drawings and the appended claims.

### Brief Description of the Drawings

Fig. 1 shows a diagrammatic view of an air manager system suitable for the present invention, associated with a metal-air cell, shown in cross-section.

Fig. 2 is a diagrammatic view of an alternate embodiment which incorporates a humidifier into the air manager system.

Fig. 3 shows a top view of the cathode plenum of the embodiment shown in Figs. 1 and 2.

Fig. 4 shows a flow diagram which illustrates an embodiment of the present invention utilizing automatically controlled air valves.

Fig. 5 shows a flow diagram which illustrates another embodiment of the present invention utilizing automatically controlled air valves.

### Detailed Description of the Invention

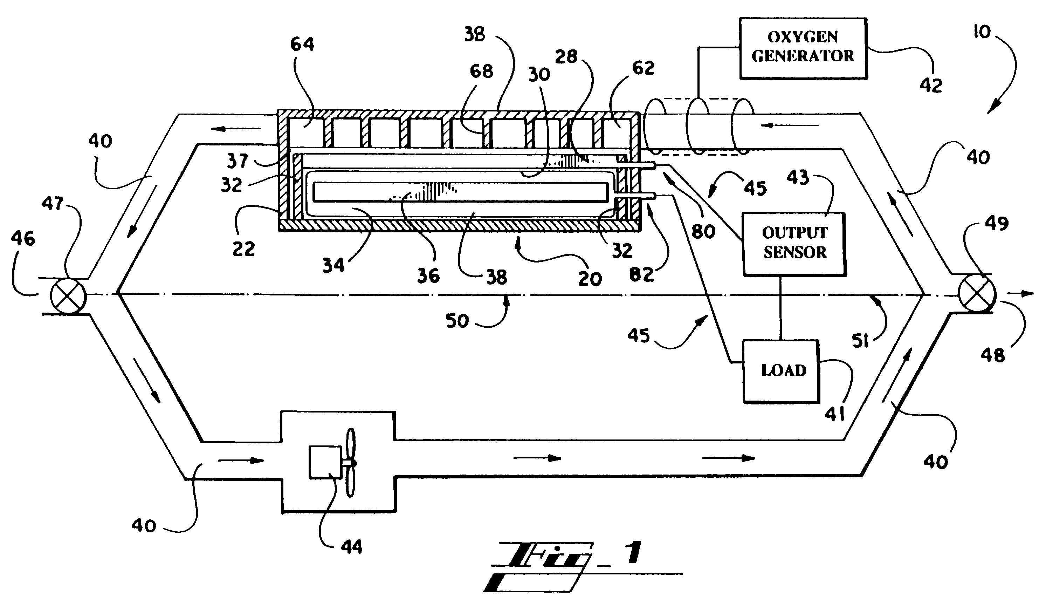

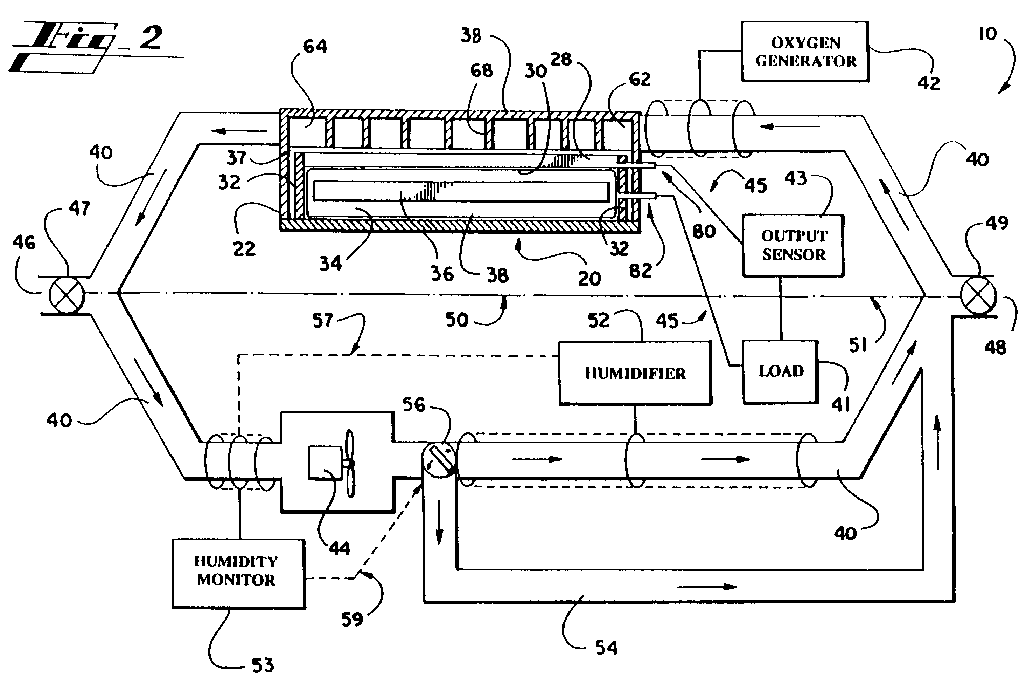

Referring in more detail to the drawing, in which like numerals refer to like parts throughout the several views, Figs. 1 and 2 show an air manager system 10, suitable for the present invention, for a secondary metal-air cell 20 incorporating a bi-functional air electrode. Disposed within a cell case 22 are: a cathode 28 supported by a rectangular support 32, an anode 36, and an electrolyte 34. A cathode plenum 39 in which reactant air circulates may be provided over the cathode 28. Within the cell case 22 of metal-air cell 20, the rectangular support 32 fits about the periphery of the anode 36 and the cathode 28. Suitable air cathodes are disclosed in U.S. Patents 4,354,958; 4,518,705; 4,615,954; 4,927,514; 4,444,852. Air passes to the cathode 28 through a gas permeable membrane 37. A suitable anode 36 is a wrapped zinc anode such as that disclosed in U.S. Patent 4,957,826 . The anode 36 is wrapped in a sheet 38 of absorbent, wettable, oxidation-resistant woven or nonwoven cloth, such as cotton, rayon, modified CMC or wettable plastic fibers. This sheet 38 is soaked in a suitable electrolyte 34 such as an aqueous base including a group I metal hydroxide such as KOH, LiOH, NaOH, CsOH, or the like, as disclosed in U.S. Patent 4,957,826.

As shown in Figs. 1 and 2, the air manager system 10 suitable for the preferred embodiment of the present invention comprises a recirculating pathway 40 for the reactant air of the metal-air cell 20. The cathode plenum 39 is included in the recirculating pathway 40 so as to define a closed path for the recirculated air. The recirculating air flow to the cathode is separate from a coolant air flow that is adjacent to the anode. The recirculating pathway 40 may incorporate an oxygen generator 42 or other source of relatively pure oxygen adjacent to the metal-air cell 20 to provide an alternate source of oxygen. A fan 44 is positioned into the recirculating pathway 40 to facilitate the recirculation of the reactant air and to increase the turbulence of the reactant air. Preferably, the flow rate of air through the pathway is greater than 0.5 liters per minute. The recirculating pathway 40 has an air inlet 46 and an air outlet 48 through which air flow is controlled by air inlet valve 47 and air outlet valve 49, respectively. The air inlet 46 and air inlet valve 47 admit ambient air into the flow of recirculating reactant air in an amount sufficient only to approximately replace the oxygen removed by the cell from the recirculating reactant air. A proportionate amount of reactant air may be exhausted through air outlet 48 when the air valve 47 is opened. Ambient air is admitted into the flow of reactant air so as to maintain a selected current output. The valves 47 and 48 may be closed after a sufficient amount of air has been admitted.

The flooding and drying out problems, discussed above, may be controlled by recirculating and mixing the ambient and the reactant air through the recirculating pathway 40. The air outlet valve 48 is closed initially and thus the initial supply of oxygen to the cell is obtained from the ambient air. After a sufficient amount of ambient air is admitted to allow battery operation, the air inlet valve 46 is closed and the air is circulated through the recirculating pathway 40. The fan 44 increases the rate of flow of circulating air at a rate corresponding to load demand.

An output sensor circuit 43, which comprises a conventional current sensor and a microprocessor (not shown), monitors the current to determine when an insufficient current is being drawn from the metal-air cell 20 to meet a predetermined load demand. The current sensor's output is analyzed by the microprocessor. Also, the microprocessor resets the air valves periodically to assure that an excessive amount of air is not being supplied to the metal-air cell in response to the output sensor circuit 43. The sensor circuit 43 is connected along the load circuit 45 to monitor the current drawn by the load 41. The load circuit 45 is connected at one end to a cathode terminal 80 and at another end to the anode terminal 82.

The sensor circuit 43 provides an output signal indicating when the level of current being drawn from the metal-air cell 20 indicates that an adjustment of air is appropriate. For loads that have varying modes of operation, the amount of current necessary for a particular mode of operation will vary. The output sensor circuit 43, in particular the microprocessor, may monitor the load status to determine the mode of operation and upon determining the mode of operation, may compare the minimum amount of current required for that particular status with the actual current being drawn. For example, if the load is a computer, the status or condition of the various integrated circuits connected to the microprocessor may be determined by reading the status registers of the integrated circuit device. Depending on the status or mode of operation of the device. the air available to produce the required current may be adjusted. If the current being drawn for the particular status is below the minimum current required for that status then insufficient current draw is indicated. Similarly, if the current being drawn for the particular status is sufficient but more air than needed is being provided to the metal-air cell 20 then a signal indicating a need for restriction of air flow is provided. The signals generated that indicate insufficient current or a need for restriction of air flow may be input to a responsive circuit, such as air valve controllers or a display.

The current sensor utilized by the present invention preferably senses the magnetic field around the conductor connected to the load to determine the amount of current flowing through the conductor. Those skilled in the art will appreciate that it is possible to measure the current drawn by other means. Various types of current sensors, such as transformer type sensors or Hall-effect devices, may be used to measure the magnetic field surrounding a conductor. In a transformer type sensor, the conductor acts as the primary electromagnetic element of a transformer, and turns a wire around the core act as a secondary electromagnetic element. A current proportional to the current in the primary conductor is induced into the secondary element. In the Hall-effect device, a semiconductor sensor is inserted into a narrow slit in a core. This semiconductor sensor detects the existence and strength of the magnetic field induced by the conductor, from which the proportional output voltage may be generated. The output voltage signal which is proportionate to the current flowing in the conductor may be measured, stored, and analyzed in the microprocessor.

If manual valves 47 and 49 are being utilized. the responsive circuit may comprise a visual display that indicates an insufficient amount of oxygen or a need for restriction of air supply by lighting appropriate LED's or by inputting the signal to a liquid crystal display (LCD). Also, the signal indicating an insufficient amount of oxygen or a need for restriction of air flow may be input into a conventional tone generator or may be input into a conventional sound or voice recording/playing chip to generate a predetermined message in response to the supply of air.

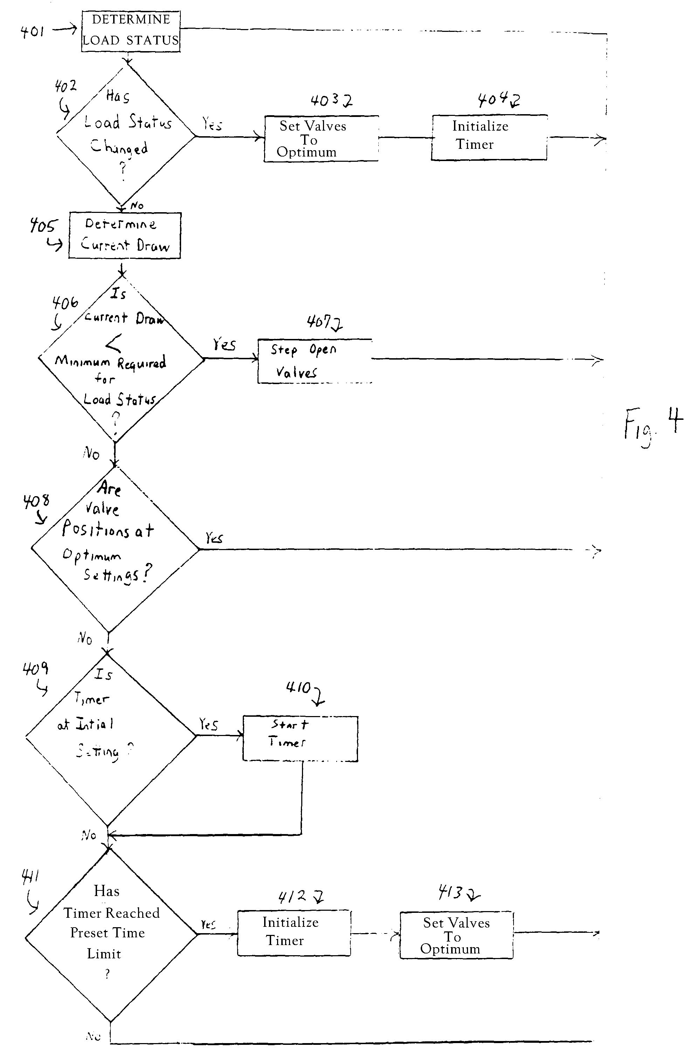

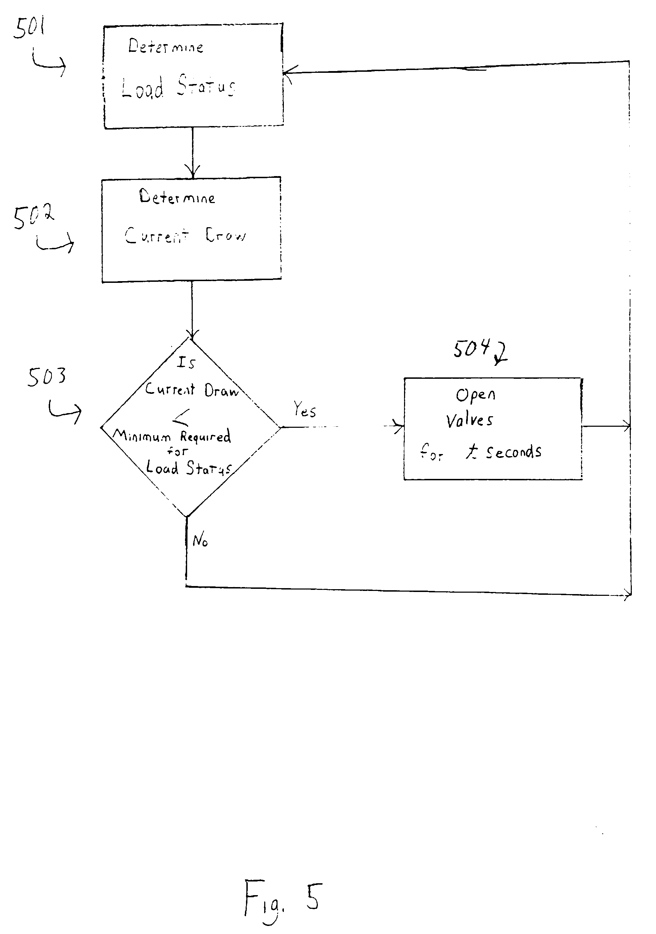

Referring to Fig. 4 and Fig. 5, flow diagrams are shown to illustrate embodiments of the present invention utilizing air valves that are automatically controlled by the sensor circuit 43. Various modes of operation may be utilized by a given load. For each of these modes (load status), a minimum or optimum current draw may be determined and for each load status an optimum air valve setting, designed to produce the appropriate current output, may be determined. For each load status, a minimum or optimum current draw for that load status may be stored in a memory table located within the memory associated with the load or a memory device associated with the sensor circuit 43. These predetermined optimum values may be utilized by the present invention to adjust the amount of air available to the cell so that an appropriate current can be generated to meet load demand. The optimum valve settings may also be stored for each load status.

Referring in more detail to Figure 4, an embodiment of the present invention is shown that maintains a steady state oxygen flow to the metal-air cell such that the air valves are automatically adjusted when load demand changes. At step 401, the sensor circuit 43 reads the present load status. Initially the load status is set to equal the load status requiring the least current before the first iteration of the flow diagram loop. The load status is then evaluated, at step 402, to determine whether there has been a change in load status since the previous load status determination. If the load status has changed, a signal is provided to adjust the air valves at step 403 to equal the optimum setting for that load status in order that the appropriate amount of air is available to the metal-air cell 20 to produce the appropriate current. This adjustment may either increase or decrease the oxygen supply, depending on the new load status. At 404, a timer, as discussed below, is initialized for each status change. At step 405, the actual current being drawn by the load, as measured by sensor 43. is evaluated, then at step 406, the measured current is compared to the minimum current required for the particular load status. If the actual current being drawn is less than the minimum required for that load status, then a signal is provided to step open the air valves by a predetermined increment at step 407. Steps 401, 402, 405 and 406 are then repeated in order to determine if the air valves have been opened to a sufficient position so that current demand is met. At step 406, if the current draw is less than the minimum required for the load status then the air valves are stepped opened by a further predetermined increment at step 407. However, if the current draw is not less than (equals or exceeds) the minimum required for the particular load status as determined at step 406 then at step 408 the air valves are evaluated to determine if the valves are at the stored optimum setting. If the valve positions are at the optimum settings for the particular load status then the monitoring steps discussed above are repeated. However, at step 408, it is possible that the air valves have been stepped open wider than the optimum setting for the particular load status in order, for example, to compensate for air which has a lower oxygen content than optimum conditions. Such situation might occur if smoke was in the area for period of time.

To deal with a situation in which the current drawn by the load is sufficient but the valves are opened beyond the optimum position for the load status, such as when the oxygen supply in the air is low, a timing loop is provided to return the valve setting to its optimum position at the expiration of a preset time. If the air valves were allowed to remain open beyond the optimum setting for the particular load status, more air than needed would be provided to the metal-air cell 20 when the oxygen content of the air returned to its usual make-up. At step 409, if the timer is at its initial setting, indicating that the timer has not been started for the particular load status, then the timer is started at step 410. At step 411 if the timer has not reached its limit then the evaluation process begins again at step 401. However, if the timer has reached its limit at step 411 then at step 412 the timer is reset to its initial setting. A signal is then provided to decrease the air valve settings to the optimum positions at step 413 after the expiration of the time limit. By providing a method to decrease or restrict the air provided to the metal-air cell and depending on whether the air has a high humidity or low humidity, the problems discussed above concerning flooding and drying out of the cell are ameliorated.

Referring in detail to Fig. 5, another embodiment of the present invention which also utilizes automatically controlled air valves is shown. The embodiment shown in Fig. 5 is not as complex as the embodiment depicted in Fig. 4. At step 501, the load status is determined, then at step 502 the actual current draw of the load is determined. At step 503, if the current draw is less than the minimum required for the load status then the microprocessor generates a signal to open the air valves at step 504 for a predetermined time, after which time the air valves close. By closing the valves after sufficient air has been admitted, flooding and drying out is controlled. The air is utilized by the metal-air cell 20 to produce current sufficient to meet load demand. The program returns to step 501 to check load status and again checks current draw at step 502. When the oxygen within this closed system is depleted to an extent that the actual current being drawn is less than the minimum required for the load status then the valves are opened again at step 504 for the predetermined time limit. The predetermined time limit for opening the valves may be the same for each load status or may vary according to the load status. With this system, the load will be put under momentary strain after a period of time even if the load status stays the same because the oxygen within the closed system will be depleted, thus causing the actual current being drawn to fall below the minimum required until the air valves are opened again. The time period for which the current falls below optimum will be brief as the air valves are immediately opened.

The microprocessor associated with the load evaluates the output sensor, the load status memory locations, and the air valves to generate or receive the appropriate output or input signals as described above. Appropriate software may be written to implement the logic shown in Fig. 4 and Fig. 5. The timing loops provided for in the logic may be implemented with software, by using an internal timer on the microprocessor, or by using common timing devices that are utilized by those skilled in the art.

When insufficient current draw is indicated, air inlet valve 47 may be manually opened or may be automatically opened by a solenoid valve controller (not shown) in the sensor circuit 43 via control line 50 in a conventional manner. Likewise, when indicated, the air outlet valve 47 may be manually opened, or automatically opened via control line 51 to exhaust air as discussed above. After a sufficient amount of air has been admitted, various modes of operation may be utilized. The modes of operation can vary from low current output to high current output depending both upon the amount of oxygen admitted to the air manager 10 and the rate at which the fan 44 is operated. If the admitted air has a high oxygen content (by use of an oxygen generator. or filtering other components from the air, for example) and the fan 44 is operated at high speed, such as 500 cubic inches per minute, then a maximum mode of operation may be utilized. Similarly, intermediate and low modes of operation may be utilized if the oxygen content of the air is lower or the fan speed is lowered.

Those skilled in the art will understand that the time delays in Figs. 4 and 5, and the incremental increase in the valve openings called for in Fig. 5 can be determined and optimized based on the nature of the load.

Alternately, the valves 46 and 47 may be set to provide a selected constant rate of make-up ambient air, which would provide a generally steady state of output from the cell while minimizing humidity imbalance.

Instead of admitting ambient air when oxygen is depleted, the oxygen generator 42 may also supply oxygen sufficient to meet load demand. When the ambient air has a high relative humidity, a supply of oxygen from the generator 42 serves an important function in helping to prevent battery flooding. By using oxygen from the generator 42 when oxygen is depleted from the reactant air, the relative humidity within the air manager system 10 may be more readily equalized to the vapor pressure of the water in the electrolyte 34 within the metal-air cell 20. Various modes of operation may be utilized when using oxygen from the generator 42 in a similar manner as discussed above.

Those skilled in the art will understand that controlling the speed of air flow across the cathode 28 affects current output for the load connected to a metal-air cell 20 as taught by U.S. Patent 4,913,983. Adjusting the rate of the air flow across the cathode 28 can be used along with ambient air control as described above.

Fig. 2 shows an alternative embodiment, which provides greater humidity control. A humidifier 52 is incorporated into the recirculating pathway 40 to humidify the recirculated reactant air when the vapor pressure in the air is low. The humidifier 52 is operative in response to a humidity monitor 53 which monitors the humidity of the reactant air. A bypass channel 54 extends around the humidifier 52 to provide an alternate route for sufficiently humidified recirculating air. A solenoid valve 56. operative in response to the humidity monitor 53, may be used to control the proportions of recirculating air flow through the humidifier 52 and/or bypass channel 54. The humidifier may consist of any common type of humidifier, such as a moisturizing pad, or may be variable as to the rate at which humidity is added to the air.

As discussed above, the relative humidity of the ambient air can affect cell performance and useful life. The humidifier 52 provides greater control over the humidity of the recirculating reactant air. The solenoid valve 56 may be used to selectively direct proportions of air flow, depending on the humidity of the air, through either channel to prevent drying out or flooding of the metal-air cell 20. By monitoring the relative humidity of the air being utilized by the metal-air cell 20, the humidity monitor 53 may optimally control the output, if variable, of the humidifier 52 by a control line 57. Similarly, the humidity monitor 53 may optimally control the proportions of air directed through the humidifier 52 or the bypass channel 54 by a control line 59.

A microprocessor (not shown) associated with the humidity monitor 53 may be conventionally programmed to compare a stored value representing optimum humidity in the recirculating air with the actual measured humidity so that the microprocessor may utilize a solenoid valve 56 via control line 59 to proportionately direct the air flow through the appropriate channels. If, for example, the relative humidity of the mixed circulating air is less than the vapor pressure in the metal-air cell 20 the air flow is directed through the humidifier 52 until the appropriate equilibrium condition for the metal-air cell 20 is reached. After the equilibrium condition is reached, the recirculating air is directed through the bypass channel 54. If the relative humidity of the admitted ambient air is slightly greater than the optimum humidity for the metal-air cell 20, the air flow is directed through the bypass channel 54. If the relative humidity of the ambient air is great enough to cause flooding of the metal-air cell 20, then portions of the ambient air may be mixed with the oxygen from oxygen generator 42 until an equilibrium condition is established and the mixture may be directed through the bypass channel 54. Simultaneously directing portions of the air flow through both the humidifier 52 and bypass channel 54 may be utilized to accomplish equilibrium. The recirculating pathway 40, the humidifier 52, the bypass channel 54, and the humidity monitor 53 act in conjunction to provide optimum operating conditions for the air utilized by the metal-air cell 20. The embodiment of Fig. 2 otherwise incorporates the functional aspects referenced in Fig. 1 described earlier.

Thus, it will be seen that the problems concerning flooding or drying out of a metal-air cell due to exposure to new ambient air are controlled in the present invention as the reactant air is recirculated and the humidity of the air is controlled.

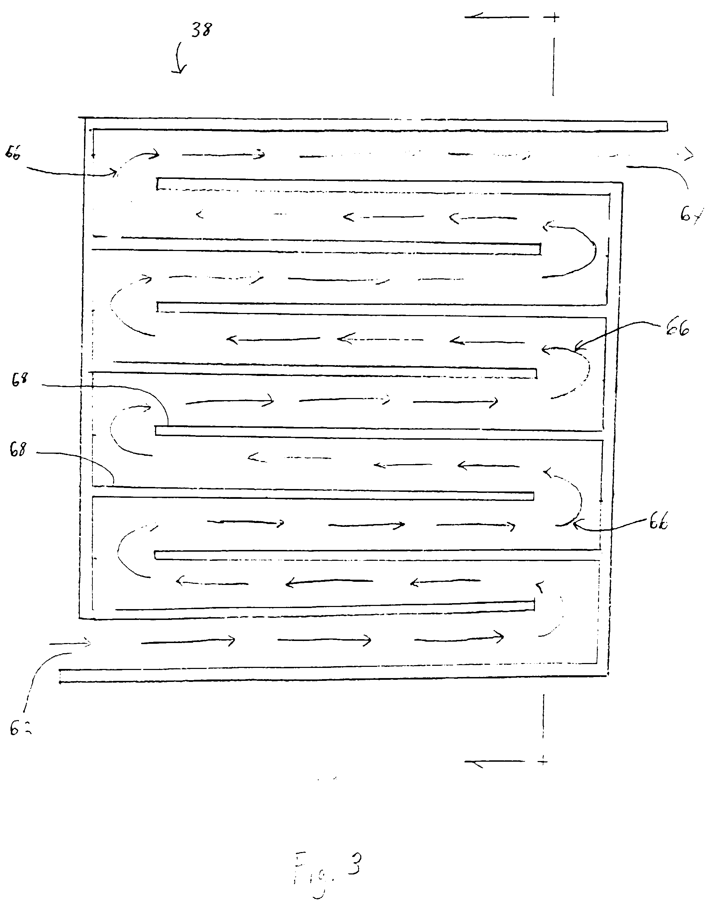

As discussed above, prior methods of providing air across the cathode of a metal-air cell may fail to utilize effectively the entire surface of the cathode. Cathode plenums generally provide plenum inlets and outlets for air to pass across the cathode. Using only an inlet and outlet to control air flow across the cathode may introduce the problem of channeling where the air flows directly from plenum inlet to outlet without utilizing the entire surface area of the cathode, and, as the oxygen is depleted, pockets of oxygen deficient air are created across the cathode. Referring to Fig. 3, the cathode plenum 39 is shown with a plenum air inlet 62 and a plenum air outlet 64. A nonlinear pathway 66 from the plenum air inlet 62 to the plenum air outlet 64, represented by arrows in Fig. 3, helps to provide a more efficient air flow across the entire surface of the cathode 28 thus more efficiently produces current output from the metal-air cell 20 therefore less new ambient air needed. By utilizing a nonlinear pathway across the cathode, turbulence is created which helps to eliminate the problems associated with air channeling. Baffles 68 may define the nonlinear pathway 66 from the plenum air inlet 62 to the plenum air outlet 64. The problem of channeling is overcome by incorporating a nonlinear pathway 66 from the plenum air inlet 62 to the plenum air outlet 64. The nonlinear pathway 66 preferably forms a serpentine path. Preferably, the cross sectional width of the inlet 62 parallel to the surface of the cathode 28 is smaller than the cathode surface breadth which is transverse to the air-flow pathway 66 at the inlet.

The cathode plenum 39 may be incorporated into a metal-air cell 20 as shown in the air manager systems of Figs. 2 and 3. By utilizing the cathode plenum 39 and the recirculating pathway 40 shown in Figs. 2 and 3, the output efficiency from a given supply of air may be optimized in the present invention without increasing the risk of flooding or drying out.

From the foregoing, it can be seen that the present invention provides a metal-air power supply which optimally uses a given amount of reactant and ambient air to produce a desired current output while reducing the effects of drying out or flooding.

The foregoing relates only to the preferred embodiment of the present invention, and many changes may be made therein without departing from the scope of the invention as defined by the following claims.

## Claims

1. A metal-air power supply including a metal-air cell having an air cathode and anode, said metal-air cell for providing energy to a load, a reactant air pathway directed adjacent to said cathode; said pathway being operative for directing a flow of air adjacent to the air cathode to provide reactant air and for removing the reactant air from adjacent to the air cathode and for recirculating the flow of the reactant air back to the cathode; an adjustable air inlet for admitting ambient air into the flow of said recirculating reactant air; an output monitoring circuit connected to measure an output current drawn from said metal-air cell during operation of said load; and means for operating said air inlet, characterized by:
said load having a plurality of modes of operation and providing a readable load status to indicate the operative mode of operation;
an output sensor circuit, connected to said load, for reading the load status to determine the operative mode of operation of said load,
said output sensor circuit storing values in a memory unit that indicates the optimum air inlet setting for individual modes of operation of said load, and
said output sensor circuit adjusting said air inlet to the air inlet value stored in said memory corresponding to the operative mode of operation of said load.

2. The apparatus of Claim 1 further characterized by means for determining the amount of current being drawn by said load, and means for adjusting said air inlet based on a comparison of the mode of operation of said load with said amount of current being drawn.

3. The apparatus of Claim 2 wherein said output sensor circuit is further characterized by a timer and means for starting said timer when said air inlet position is not at the optimum position for the present mode of operation of said load and said current drawn is less than the minimum current required for the present mode of operation of said load and wherein said output sensor circuit adjusts said air inlet position to the preselected optimum position after said timer indicates that a preselected time limit has expired.

4. The apparatus of Claim 1 further characterized by means for determining the amount of current being drawn by said load and means for opening said air inlet for a predetermined time to provide air to said metal-air cell when said current is insufficient to meet load demand.

5. The apparatus of Claim 4 wherein said output sensor circuit is further characterized by means for determining whether the current drawn is less than the minimum current required for the present mode of operation of said load and for adjusting said air inlet when said current drawn is less than the minimum current required for the present mode of operation of said load.

## Patentansprüche

1. Eine Metall-Luft-Energiequelle (Batterie) mit einer Metall-Luft-Zelle mit einer Luft-Kathode und einer Anode, zur Lieferung von Energie an eine Last, wobei ein Strömungspfad von Reaktions-Luft zu der Kathode zur Lieferung einer direkten Strömung reagierender Luft (Sauerstoff) in die Umgebung der Luftkathode und zur Entfernung verbrauchter Luft zu bzw. von der Luft-Kathode vorgesehen ist; mit einem einstellbaren Lufteinlass zur Zufuhr von Luft von aussen in die zirkulierende Luftströmung; mit einem Ausgangssteuer- bzw. Anzeigekreis zur Messung des von der Metall-Luft-Zelle während des Betriebs der Last abgegebenen Stromes; und mit Mitteln zur Betätigung des Luft-Einlasses, gekennzeichnet durch:
die Last hat eine Vielzahl von Betriebsarten und liefert jeweils einen ablesbaren Laststatus-Wert zur Anzeige der jeweiligen Betriebsart;
ein Ausgangsfühlerkreis ist an die Last angeschlossen zum Ablesen des Last-Zustandes zur Bestimmung der Betriebsart der Last;
wobei der Ausgangsfühlerkreis in einem Speicher Werte speichert, die jeweils das Optimum der Einstellung des Lufteinlasses für die Betriebsarten (Moden) der Last anzeigen, und
der Ausgangsfühlerkreis stellt die in den Lufteinlass eingelassene Luftmenge auf den in dem Speicher gespeicherten Wert, entsprechend dem jeweiligen Betriebszustand oder Modus der Last.

2. Der Apparat nach Anspruch 1, weiter gekennzeichnet durch Mittel zur Bestimmung des Betrages des von der Last aufgenommenen Stromes und Mittel zur Einstellung des Lufteinlasses gemäss einem Vergleich der Betriebsarten der Last mit dem besagten Betrag des aufgenommenen Stromes.

3. Der Apparat nach Anspruch 2, wobei der Ausgangsfühlerkreis weiter gekennzeichnet ist durch ein Zeitsteuergerät und Mittel zum Starten der Zeitsteuerung, wenn die Position bzw. Stellung des Lufteinlasses sich nicht in der optimalen Stellung für die gegenwärtige Betriebsart der Last befindet und der aufgenommene Strom kleiner ist als der für die gegenwärtige Betriebsart erforderliche Strom, und wobei der Ausgangsfühlerkreis die Stellung des Lufteinlasses einstellt auf die vorgewählte optimale Stellung, nachdem die besagte Zeitsteuerung anzeigt, dass eine vorbestimmte Zeitgrenze verstrichen ist.

4. Der Apparat nach Anspruch 1, ferner gekennzeichnet durch Mittel zur Bestimmung des Betrages des durch die Last aufgenommenen Stromes und Mittel zur Öffnung des Lufteinlasses während einer vorbestimmten Zeit zur Lieferung von Luft an die Metall-Luftzelle, wenn der besagte Strom unzureichend ist für die Belastung.

5. Der Apparat nach Anspruch 4, wobei der Ausgangsfühlerkreis weiter gekennzeichnet ist durch Mittel zur Bestimmung, ob der aufgenommene Strom geringer ist als der minimale für den gegenwärtigen Betriebszustand erforderliche Strom und zur Einstellung des Lufteinlasses, wenn der aufgenommene Strom geringer ist als der für den gegenwärtigen Betriebszustand der Last erforderliche Strom.

## Revendications

1. Appareil d'alimentation en énergie métal-air comprenant une cellule métal-air qui comporte une cathode à air et une anode, la dite cellule métal-air étant destinée à fournir de l'énergie à une charge , un chemin pour l'air de réaction dirigé de façon adjacente à la dite cathode; le dit chemin agissant pour diriger un flux d'air de façon adjacente à la cathode à air afin de fournir de l'air de réaction et pour éloigner l'air de réaction de sa position adjacente à la cathode à air et pour faire recirculer le flux d'air de réaction afin qu'il retourne à la cathode; une entrée d'air réglable pour l'admission d'air ambiant dans le flux du dit air de réaction en recirculation, un circuit de contrôle de sortie relié de façon à mesurer un courant de sortie extrait de la dite cellule métal-air pendant le fonctionnement de la dite charge; et des moyens d'actionnement de la dite entrée d'air, caractérisée en ce que
la dite charge présente plusieurs modes de fonctionnement et fournit un statut de charge lisible afin d'indiquer le mode actif de fonctionnement;
un circuit de captage de sortie, relié à la charge, qui est destiné à lire le statut de la charge afin de déterminer le mode actif de fonctionnement de la dite charge,
le dit circuit de captage de sortie emmagasinant des valeurs dans une unité de mémoire qui indique le réglage optimum d'entrée d'air pour des modes individuels de fonctionnement de la dite charge, et
le dit circuit de captage de sortie ajustant la dite entrée d'air à la valeur d'entrée d'air emmagasinée dans la dite mémoire et qui correspond au mode actif de fonctionnement de la charge.

2. Appareil selon la revendication 1, caractérisé de plus par un moyen de détermination de la quantité de courant absorbée par la dite charge , et par un moyen de réglage de la dite entrée d'air sur la base d'une comparaison du mode de fonctionnement de la dite charge et de la dite quantité de courant absorbée.

3. Appareil selon la revendication 2, dans lequel le dit circuit de captage de sortie se caractérise de plus par une minuterie et par un moyen de déclenchement de la dite minuterie lorsque la dite position de l'entrée d'air n'est pas à la position optimum pour le présent mode de fonctionnement de la dite charge et que le dit courant absorbé est inférieur au courant minimum nécessaire pour le présent mode de fonctionnement de la dite charge et dans lequel le dit circuit de captage de sortie règle la dite position d'entrée d'air à la position optimum prédéterminée après que la dite minuterie indique l'expiration d'une limite de temps prédéterminée.

4. Appareil selon la revendication 1, caractérisé de plus par un moyen de détermination de la quantité de courant absorbée par la dite charge, et par un moyen d'ouverture de la dite entrée d'air pendant un laps de temps prédéterminé pour fournir de l'air à la dite cellule métal-air lorsque le dit courant est insuffisant pour satisfaire la demande de la charge.

5. Appareil selon la revendication 4, dans lequel le dit circuit de captage de sortie est caractérisé de plus par un moyen servant à déterminer si le courant absorbé est inférieur au courant minimum nécessaire au présent mode de fonctionnement de la dite charge et à régler l'entrée d'air lorsque le dit courant absorbé est inférieur au courant minimum nécessaire au présent mode de fonctionnement de la dite charge.
